# EUROPEAN PATENT SPECIFICATION

(11) **EP 3 933 453 B1**
(45) Date of publication and mention of the grant of the patent: **12.04.2023**
(21) Application number: 21183183.9
(22) Date of filing: 01.07.2021
(51) Int. Cl.: G01W 1/02

(54) **ROAD SENSOR ASSEMBLY AND METHOD OF MANUFACTURING THE SAME**
STRASSENSENSORANORDNUNG UND VERFAHREN ZUR HERSTELLUNG DAVON
ENSEMBLE DE CAPTEUR DE ROUTE ET SON PROCÉDÉ DE FABRICATION

(30) Priority: 02.07.2020 NL 2025973
(43) Date of publication of application: 05.01.2022
(73) Proprietor: Koninklijke BAM Groep N.V., 3981 AZ Bunnik (NL)
(72) Inventor: VAN DER NEUT, Willem, 3981 AZ Bunnik (NL)
(74) Representative: EP&C

(56) References cited:
- EP-A2- 3 153 892
- US-A- 5 418 522

## Description

### Technical field of the invention

The present invention relates to the field of road sensors for performing weather-dependent slipperiness measurements. Precipitation - such as rain, hail, snow and fog - and freezing have an effect on the slipperiness of a road.

### Background of the invention

In order to monitor the condition of a local, regional, national or international road network, it is known to provide this road network with sensors which measure the 'weather condition' of the road at various locations. These sensors are situated in the surface of the road and are connected to a road station next to the road by means of wire which is recessed into the road. This road station contains electronic components, usually provided on a printed circuit board, which are connected to an electrical power supply. The electrical power supply may be the electricity network, a solar panel, a battery, or solar panel/battery combination. The electronic components process the electrical signals originating from one or more sensors and, via a wired or wireless network, transmit signals which are representative of the electrical signals originating from the sensors, optionally via one or more intermediate stations, to a processing station, such as a weather agency or gritting service. A weather agency will be able to use the signals received in this way in many ways, for example for weather forecasts and weather reports which may or may not be targeted at traffic. A gritting service will be able to use signals received directly or the forecasts or reports received via a weather service to determine where and when gritting has to take place.

In this case, it is known to use slipperiness sensors which determine the slipperiness of a stretch of road on the basis of the electrical conductivity (or in other words the electrical resistance). When the road is dry, the electrical conductivity will be small or zero - corresponding to electrical resistance high or infinite. When the road is wet, the electrical conductivity will be higher, depending on the degree of wetness, which corresponds to an electrical resistance which is smaller when the degree of wetness is higher. In this way, the electrical conductivity and/or the electrical resistance of a road provides information about the 'weather condition' of the road at the location of the slipperiness sensors. If gritting will be or has been performed in winter, the conductivity and/or electrical resistance will be influenced further by the amount of salt which is present on the road and thus additional information about the weather condition of the road at the location of a slipperiness sensor is obtained. An example of a known slipperiness sensor is the G sensor or (written out in full) 'geleidbaarheidssensor' (Eng: conductivity sensor) which BAM has been producing and supplying for many years. This sensor consists of a disc made of a synthetic resin comprising a metal outer sleeve, a metal inner sleeve which is concentrically placed therein, and a road-like top layer with gravel on the top side of the disc. Via a wire, the inner sleeve and outer sleeve are connected to the road station which measures the electrical conductivity/resistance of the road-like top layer between the inner sleeve and outer sleeve. The disc is placed in a hole which has been drilled into the road and the wires are passed from the sensor disc to the road station via grooves milled into the road. One more example of a road safety sensor can be found in published patent US 5 418 522.

For installation and replacement of a slipperiness sensor, the carriageway in which the slipperiness sensor is being installed has to be closed to traffic in order to be able to make the bore, to mill the grooves, to fit the sensor and wiring and to fill in the grooves again. When - in the case of traffic driving on the right-hand side - a slipperiness sensor is fitted in a left-hand carriageway, the carriageways situated on the right-hand side also have to be closed off in order to mill the grooves and to fill them in again after the wire has been placed (in the case of traffic driving on the left-hand side, this will be opposite).

In addition to a slipperiness sensor, temperature sensors are often fitted in the road near this slipperiness sensor in order to measure the temperature of the road. These temperature sensors are also connected to the road station next to the road by means of a wire which runs through a groove milled into the road, where the electronic components will process the signal from the temperature sensors and transmit it to the processing station. Since these temperature sensors have in practice been found to be susceptible to defects due to the impact of the traffic driving on the road, the temperature sensors are usually fitted in groups of 3 or more. On the one hand, it is then easily possible for the processing station to recognise a measurement error resulting from a temperature sensor becoming defective - after all, they will rarely become defective all at exactly the same time -, on the other hand it is still possible to continue to measure when a sensor becomes defective. The susceptibility to defects means that defect temperature sensors have to be replaced. When installing and replacing temperature sensors, grooves have to be milled into the road for the wiring - as is the case with the slipperiness sensors. In this case, the respective carriageway has to be closed off. When - in the case of traffic driving on the right-hand side - temperature sensors are fitted in a carriageway on the left-hand side, it is in addition necessary to close off the carriageways situated on the right-hand side in order to mill the grooves and to fill them in again after the wire has been placed.

### Summary of the invention

A road sensor assembly according to the preamble of Claim 1 is known from US-5,418,522.

The object of the present invention is to provide an improved or alternative road sensor assembly of the type according to US-5,418,522. It is a further object of the present invention to provide an improved or alternative road sensor assembly of the type which measures the electrical conductivity (or vice versa the electrical resistance) of the surface of a road in order to determine the humidity and/or the saltiness of the road. Yet another object of the invention is to provide such a road sensor assembly according to one or another type which can be installed and replaced more quickly, easily and with less inconvenience to traffic.

One or more of these objectives are achieved according to the invention by providing a road sensor assembly for performing measurements on the surface of a road, wherein the assembly comprises the following:
- a disc made of a solid material dielectric,
- a metal outer sleeve which is provided in or around the dielectric,
- a metal inner sleeve which is provided in the dielectric, in the outer sleeve and concentrically with respect thereto,
- an annular top layer on a top side of the disc, which annular top layer extends in the part between the inner sleeve and outer sleeve, connects the inner sleeve and outer sleeve, and is configured to simulate a road surface,
- a first printed circuit board provided with electronic components which are electrically connected to the inner sleeve and outer sleeve, and which are configured to determine the electrical conductivity of the top layer and to generate a transmitter signal comprising information representative of the electrical conductivity,
- an antenna connected to the electronic components and configured to transmit the transmitter signal, and
- an electrical power supply connected to the electronic components for supplying them with electrical power,

wherein the disc has an outer side which is delimited by the top side which, in use, faces upwards, by a bottom side which, in use, faces downwards, and by a peripheral wall which extends between the top side and the bottom side,
wherein the electrical power supply is a battery which is embedded in the dielectric, and wherein the first printed circuit board provided with electronic components and the antenna are enclosed in the dielectric.

In this application, the expression 'top side of the disc' is understood to mean that side of the disc which, in use, i.e. when the assembly has been fitted in a road, faces upwards, wherein the top side of the disc will generally be coplanar with the surface of the road. Similarly, the expression `bottom side of the disc' in this application is understood to mean the side of the disc which, in use, faces downwards. On the outer side, the disc furthermore has a peripheral wall which connects the top side and bottom side of the disc. With a round disc, this peripheral wall may be cylindrical.

With this invention, an object 'enclosed in a dielectric' is understood to mean, in particular, that the object enclosed in the dielectric is completely enclosed by the dielectric, in other words that the dielectric surrounds the object on all sides. The respective object is thus completely 'immersed' in the dielectric as it were. In this case, an object may consist of a set of sub-objects which are fitted together - for example the first printed circuit board with the electronic components mounted thereon or the second printed circuit board with the antenna mounted thereon which is still to be discussed below -, in which case the object is then enclosed in its entirety.

With this invention, the expression 'embedded in a dielectric' is understood to mean that the respective object is submerged in the dielectric. In this case, this may refer to a partial submersion, in which a part of the respective object is situated on the surface of the dielectric and is thus not embedded in the dielectric on all sides, but submerged may also refer to a completely 'immersed' object, in which the respective object is then 'enclosed in the dielectric' and is entirely surrounded by the dielectric.

It should be noted that the dielectric, viewed across the entire disc, may consist of a material of essentially the same material composition. However, it is also conceivable for the dielectric, viewed across the entire disc, to vary with regard to material composition and/or for it to be made from different materials. Thus, it is conceivable for the dielectric to consist of 2, 3 or more zones in which each zone comprises different dielectric materials, for example the dielectric between the outer sleeve and inner sleeve could be a rubber, whereas the dielectric within the inner sleeve could be an epoxy resin. Alternatively or additionally, it is also conceivable for the material composition of the dielectric to differ, depending on the location in the disc, for example the material composition of the dielectric near the top side may differ from that underneath, while the material as such, for example epoxy resin, does not differ. The expression 'enclosed in dielectric' or 'embedded in dielectric' may thus also refer to dielectrics of different materials or different material compositions.

The annular top layer configured to simulate a road surface may in this case comprise a road-like structure, with gravel or another surface structure configured for accommodating water. The surface structure configured for, at least temporarily, accommodating water ensures that, depending on the amount of water, a different value will be measured for the electrical conductivity. Gravel provides an irregular surface structure in which water will collect when it rains. Such an irregular surface structure can also be achieved in a different way, for example by means of a regularly or irregularly distributed relief or regularly or irregularly distributed surface pores. As is customary with a road, this water will disappear again after some time by flowing away and/or evaporating and/or by passing traffic drying the road by driving on it.

By, according to the invention, enclosing the printed circuit board provided with electrical components and the antenna in the dielectric, and at least embedding the battery in the dielectric - but preferably enclosing it in the dielectric - the following is achieved:
i) the embedded/enclosed objects are protected with respect to the 'environment outside the disc' by the dielectric and are thus protected against, for example, weather conditions and mechanical action,
ii) the disc is an entirely autonomous unit without power supply wires and can thus be installed and replaced more easily (there is no need for grooves for wires to be milled and road stations next to the road are superfluous because the unit is able to transmit its data in a wireless manner),
iii) only one hole has to be made/bored into the road in order to install the disc,
iv) vulnerable connecting points for the wiring, grooves in the road or costly through-ducts under the road for cabling are no longer necessary, and
v) the inconvenience for traffic resulting from roadworks is considerably reduced.

According to yet a further embodiment of the invention, the first printed circuit board extends in a plane parallel to the top side of the disc. In this way, the printed circuit board has a relatively large surface at its disposal.

According to yet a further embodiment of the invention, the electronic components are provided on a side of the first printed circuit board which, in use, faces downwards. When incorporated in a road, the printed circuit board is thus situated between the road and the electronic components. The electronic components are thus better protected from the road traffic.

According to yet a further embodiment of the invention, the first printed circuit board comprising the electronic components arranged thereon is provided in a bottom half of the disc, near the bottom side of the disc. By providing the electronic components at the bottom of the disc, malfunction or failure thereof due to high road temperatures, as might occur, for example, in summer due to the action of the sun, is prevented.

According to yet a further embodiment of the invention, the battery is arranged in a bottom half of the disc, such as near the bottom side of the disc. By fitting the battery at the bottom of the disc, the battery is positioned further away from the top side, as a result of which the battery is more protected against the cold in wintery conditions and will thus lose less power due to this cold.

According to yet a further embodiment of the invention, the first printed circuit board is provided with a recess and the battery is provided in the recess. Due to the recess, the printed circuit board is arranged around the battery, as it were. In particular, according to a further embodiment of the invention, the recess may be configured in such a way that the battery is arranged with its longitudinal axis parallel to the board, more particularly with the longitudinal axis of the battery in the plane of the board. Thus, it is possible to provide the first printed circuit board and the battery both at, viewed, in use, in the vertical direction, approximately the same location in the disc. In this case, the battery may be relatively large and/or thick, a possible example being an AA type battery - in which AA stands for, inter alia, certain standardised dimensions.

According to yet a further embodiment of the invention, the height of the inner sleeve is smaller than the height of the outer sleeve, and the first printed circuit board and/or battery is, viewed in use and in the vertical direction, situated lower than the inner sleeve. In other words, according to a further embodiment of the invention, the battery and/or first printed circuit board (comprising the electronic components provided thereon) may be situated at least partly between the inner sleeve and the bottom side of the disc. On the one hand, it is thus possible to keep the battery and/or first printed circuit board (comprising the electronic components provided thereon) far removed from the top side of the disc and, on the other hand, the outer sleeve acts as a mechanical protection against forces acting in a plane parallel to the top side of the disc.

According to yet a further embodiment of the invention, the antenna is provided near or adjacent to the top side of the disc. The closer the antenna is situated to the top side of the disc, the better it will be able to transmit the transmitter signal or the further the transmitter signal will spread. Thus, the power usage of the assembly can be reduced.

According to yet a further embodiment of the invention, the antenna is arranged on a top side of a second printed circuit board which, in use, faces upwards. Arranging the antenna on a second printed circuit board makes it readily possible to install and mount it accurately during production of the assembly according to the invention and the risk of damage to the antenna is reduced. By mounting the antenna on the upwardly facing side of the second printed circuit board, the antenna lies close to the top side of the disc and interference of the transmitter signal to be transmitted, for example by the second printed circuit board, is prevented.

According to yet a further embodiment of the invention, the distance of the antenna enclosed in the dielectric to the top side of the disc may be at most 5 mm. In a further embodiment, this distance may be, for example, at most 3 mm. When there is no road-like top layer with, for example, gravel above the antenna, this distance may even be at most 1 to 1.5 mm. In particular when the dielectric is a moulding resin, such as epoxy resin - for example one of the epoxy resins still to be mentioned below - it is surprisingly found that a thickness of 1 mm to 1.5 mm already offers sufficient strength to protect the antenna against heavy mechanical load due to passing traffic for a prolonged period of time. It was found that the inner ring and outer ring absorb a considerable part of the forces exerted on the road by passing traffic and thus reduce the load on the dielectric.

According to yet a further embodiment of the invention, the first and/or second printed circuit board has one or more perforations with a diameter of at least 1.5 mm, such as at least 2 mm or at least 2.5 mm or at least 3mm. When the first printed circuit board provided with electronic components and possible further components and/or the second printed circuit board provided with the antenna are enclosed in the dielectric during production of the assembly, this dielectric will be liquid, at least viscous. In this case, there is a risk of air bubbles also becoming enclosed in the dielectric. From a mechanical point of view, air inclusions result in a weakening of the assembly. In order to prevent air inclusions, perforations are provided in the printed circuit board via which air bubbles may escape during production.

According to yet a further embodiment of the invention, the dielectric comprises a plurality of layers - also referred to below as dielectric layers -, and the first and/or second printed circuit board is provided in a transition zone - i.e. in a zone around the transition - of the dielectric from one layer to another layer. In this way, the assembly can be produced without an expensive injection mould by first providing a liquid, at least viscous, layer of dielectric material - also referred to below as dielectric layer - for example by pouring this first dielectric layer, subsequently placing the first or second printed circuit board comprising the electronic components and the antenna attached thereto, respectively, on the one dielectric layer, and subsequently applying a liquid, at least viscous, further layer of dielectric material, for example by pouring this second dielectric layer. The material of the one dielectric layer and the material of the further dielectric layer may in this case be of different materials or have a different material composition, but they may also be made of one and the same material and may optionally have the same material composition. Because the material for the one dielectric layer and the material for the further dielectric layer are applied (poured) in succession, with the installation of the first or second printed circuit board provided with components taking place in between, a transition between the one and further dielectric layer will remain detectable, at least on a microscopic level, for example by dust particles which are enclosed in or near the transition.

According to a further embodiment of the invention, the assembly furthermore comprises at least one temperature sensor, such as two or more temperature sensors, which are electrically connected to the electronic components, wherein the electronic components are furthermore configured to process an electrical signal coming from the at least one temperature sensor and to further provide the generated transmitter signal with information representative of the measured temperature. Thus, it is no longer necessary to mill grooves for wires towards the side of the road in order to connect the temperature sensor(s) to a road-side road station. The reason for this is that the measurements from the temperature sensor(s) are processed by the electronic components on the printed circuit board provided in the disc unit and are subsequently transmitted wirelessly by the transmitter. The information about the temperature of the road furthermore makes a clearer interpretation possible of the slipperiness of the road measured on the basis of the electrical conductivity of the road. A large quantity of water on the road at summery temperatures has entirely different consequences than a large quantity of water on the road at wintery temperatures. Furthermore, with wintery temperatures, the conductivity of the road will increase as the salt content increases and this could thus indicate whether sufficient gritting has taken place or that gritting has to be carried out.

According to yet a further embodiment of the invention, one or two of these temperature sensors are embedded and/or enclosed in the dielectric. In this way, a road sensor-assembly is obtained with fully integrated temperature sensors which are incorporated in the disc, which assembly has the external form of a disc which is delimited by the peripheral wall - which is preferably cylindrical -, the top side and the bottom side. Except for optional irregularities in the peripheral wall - for example ridges - and/or in the top side and bottom side - for example gravel on the top side or ridges on the top side and/or bottom side -, the unit is disc-shaped. For installation, it suffices to make a hole which corresponds to the disc shape in the road. In the case of a cylindrical disc, a hole of this kind may be drilled into the road. In addition, the temperature sensors are protected from the 'external environment of the disc' by embedding or enclosing them in the dielectric - just like the printed circuit board with electronic components and the antenna - to render them less susceptible to defects.

According to yet a further embodiment of the invention, the temperature sensor(s) embedded and/or enclosed in the dielectric are provided on the outer side of the disc, such as adjacent to the outer side of the disc according to a further embodiment. The closer the temperature sensors are situated to the outer side of the disc, the more accurately they will be able to measure the temperature of the road.

According to an alternative or additional further embodiment of the invention, the temperature sensors embedded and/or enclosed in the dielectric are provided at the top side and/or - more particularly 'and' instead of 'and/or' - the peripheral wall of the disc. According to a further embodiment of the invention, the temperature sensors embedded and/or enclosed in the dielectric may be provided adjacent to the top side and/or - more particularly 'and' instead of 'and/or' - the peripheral wall of the disc. The closer the temperature sensors are situated to the top side of the disc, the more accurately they will be able to measure the temperature of the road surface.

According to yet a further embodiment of the invention, the distance of the temperature sensor(s) embedded and/or enclosed in the dielectric to the top side and/or peripheral wall of the disc will be at most 5 mm. In a further embodiment, this distance may be, for example, at most 3 mm or even at most 1 to 1.5 mm. In particular when the dielectric is a moulding resin, such as an epoxy resin - for example one of the epoxy resins still to be mentioned below -, it is surprisingly found that a thickness of 1 mm to 1.5 mm already offers sufficient strength to protect the temperature sensor(s) against heavy mechanical load due to passing traffic for a prolonged period of time.

According to a further embodiment comprising a said temperature sensor near the peripheral wall of the disc, the outer sleeve may be provided with a recess at the location of this temperature sensor in which the temperature sensor is completely or partly accommodated. Similar to the embodiment in which the battery is accommodated in a recess formed in the first printed circuit board, the temperature sensor can thus be fitted very close to the peripheral wall of the disc. According to an alternative or additional further embodiment comprising a said temperature sensor near the peripheral wall of the disc, the outer sleeve may be arranged at a distance from the peripheral wall of the disc, at least partly at a distance from the peripheral wall of the disc, in the dielectric (so that dielectric is at least present along a part of the outer side of the outer sleeve), and at least one of the temperature sensors is embedded or enclosed in the dielectric outside the outer sleeve.

According to yet a further embodiment of the invention, the dielectric is made from a synthetic resin. According to a further embodiment, the synthetic resin may be a moulding resin - such as a polyester moulding resin or an epoxy moulding resin or a polyurethane moulding resin or a combination of one or more of these moulding resins. The synthetic resin is in particular an epoxy resin. The synthetic resin may be, for example `Kabeline 2375 GLM epoxy synthetic resin' or `Kabeline 2444 epoxy synthetic resin', as is available from Filoform.

Enclosing the respective objects in a synthetic resin, for example `Kabeline 2375 GLM epoxy synthetic resin', results in a very hard dielectric mass which offers a high degree of protection to the enclosed 'objects' against mechanical effects, such as vibrations and loads caused by traffic driving on the road. According to a further embodiment, (essentially) the entire space delimited by the outer sleeve may in this case be filled with synthetic resin - such as one of the said epoxy resins or more generally epoxy resin. The metal outer sleeve in combination with the synthetic resin mass therein then forms a very hard and very strong solid unit which provides highly efficient protection for the printed circuit board and the components mounted thereon - such as the electronic components, the antenna, and the temperature sensors - which are enclosed therein against damage resulting from load by heavy traffic, salt and weather conditions.

According to yet a further embodiment of the invention, the annular top layer comprises gravel and a binder. In this case, the binder may be a synthetic resin, in particular a moulding resin, such as an epoxy resin. The gravel simulates the road and provides an irregular surface structure in which water can be held (temporarily). The binder ensures that the gravel is held together and stays on the disc. In this case, the binder may be a synthetic resin, in particular a moulding resin, such as an epoxy resin, but another binder is also conceivable. In general, the gravel will be gravel having a mesh size of at most 5 mm, such as at most 3 mm. In addition, the gravel will not be too fine. In general, the mesh size of the gravel will be at least 1 mm. The gravel may be, for example 1/3 mm gravel, that is to say gravel comprising grains of mixed sizes in the range between 1 mm and 3 mm mesh size. If desired, the part of the top side which is inside the inner sleeve may be provided with an identical top layer. Furthermore, it is also possible, if desired, to provide the part of the top side which is situated outside the outer sleeve with an identical top layer.

According to yet a further embodiment of the invention, the assembly comprises one or more spacers which are configured for the following:
- keep the antenna or second printed circuit board arranged inside the inner sleeve at a predetermined first distance of the inner sleeve;
   and/or
- keep the second printed circuit board at a predetermined second distance from the top side of the disc.

The first distance serves to provide a clearance between the second printed circuit board and inner sleeve which is sufficient to prevent air bubbles from being trapped in the dielectric during production. According to a further embodiment, this first distance may be at least 1 mm or at least 1.5 mm - such as at least 2 mm or at least 2.5 mm.

The second distance serves to ensure that the second distance has a predetermined value. This is particularly important when the antenna is attached to the top side of the second printed circuit board. If this second distance fluctuates greatly between various assemblies according to the invention, this will result in the operation - in particular the strength of the transmitter signal - of the various assemblies to differ too greatly with respect to each other. According to a further embodiment, this second distance may have a value in the range from 1 to 5 mm - such as 1 to 3 mm.

When the spacers are configured as radial projections which are distributed over the periphery of the second printed circuit board and are secured (or are securable) in recesses on the inner side of the inner sleeve, for example in the way of a bayonet fastening, then these projections can ensure that both the predetermined first distance and the predetermined second distance are achieved. In this case, the reverse is also conceivable, namely that the projections are attached to the inner sleeve and are secured (or securable) in recesses formed in the second printed circuit board. This may also be achieved, for example, in the way of a bayonet fastening.

According to yet a further embodiment of the invention, the dielectric has a melting point of at least 100 °C, such as at least 120 °C or at least 150 °C. This serves to prevent the dielectric from being affected, optionally temporarily, or being weakened in summery conditions as a result of the asphalt road warming up or heating up.

According to a further aspect, the invention relates to a method for producing a road sensor assembly according to the above-described aspects of the invention, and this method comprises the following steps:
- step a): fitting the outer sleeve and inner sleeve onto a base concentrically with respect to each other;
- step b): applying, for example by pouring, a first layer of liquid, at least viscous, dielectric;
- step c): fitting the antenna, such as the second printed circuit board comprising the antenna, onto the viscous first dielectric layer in the inner sleeve and optionally pressing down the antenna, such as the second printed circuit board comprising the antenna, into this first dielectric layer;
- step d): applying, for example by pouring, a second layer of liquid, at least viscous, dielectric in the inner sleeve in such a way that the antenna, such as the second printed circuit board comprising the antenna, is enclosed in a transition zone between the first dielectric layer and second dielectric layer;
- step e): fitting the first printed circuit board comprising the electronic components provided thereon onto the viscous second dielectric layer and optionally pressing down the first printed circuit board comprising the electronic components provided thereon into the second dielectric layer;
- step f): applying, for example by pouring, a third layer of liquid, at least viscous, dielectric in the outer sleeve in such a way that the first printed circuit board becomes enclosed in a transition zone between the second dielectric layer and third dielectric layer;
- step g): allowing the first dielectric layer, the second dielectric layer, and the third dielectric layer to cure;
- step h): electrically connecting the electronic components to the outer sleeve and inner sleeve, to the antenna, and to the battery;
- step i): applying the annular top layer; and
- step j): filling the space between the outer sleeve and inner sleeve with dielectric and
- step k): embedding or enclosing the battery in the dielectric.

For an explanation of this further aspect and further embodiments thereof to be described below, reference is made to the above explanation with respect to the assembly according to the invention.

According to yet a further embodiment of the further aspect of the invention, the following is possible:
- step h) may take place before one of steps a)-g);
   and/or
- step i) may take place before step a);
   and/or
- step j) may take place simultaneously with step b) and/or step d).

According to yet a further embodiment of the further aspect of the invention, in step a), the inner sleeve and outer sleeve are placed concentrically in a mould, which mould has a mould bottom forming the base and a mould wall which extends around the outer sleeve in such a way that a gap is created between the mould wall and the outer sleeve,
step b) furthermore comprises applying a first layer of liquid, at least viscous, dielectric in the gap,
step c) furthermore comprises providing at least one temperature sensor on the viscous first dielectric layer in the gap and optionally pressing down the at least one temperature sensor into this first dielectric layer,
step d) furthermore comprises applying a second layer of liquid, at least viscous, dielectric in the gap in such a way that the at least one temperature sensor becomes embedded or enclosed in a transition zone between the first dielectric layer and second dielectric layer formed in the gap, and
step f) furthermore comprises electrically connecting the at least one temperature sensor and the electronic components.

According to yet a further embodiment of the further aspect of the invention, the first dielectric layer in step d) is liquid, at least viscous. This ensures good bonding of the second dielectric layer with the first dielectric layer.

According to yet a further embodiment of the further aspect of the invention, the second and/or first printed circuit board has one or more perforations in such a way that, during step c) and/or step e), gas bubbles which are present in the liquid, at least viscous, dielectric layer which is applied in step b) and/or step d), or between the dielectric layer which is applied in step b) and/or step d), and the second and first printed circuit board, respectively, escape via the perforations.

According to yet a further embodiment of the further aspect of the invention, step k) - fitting the battery - takes place while the third dielectric layer is being applied in step f).

According to yet a further embodiment of the further aspect of the invention, step i) takes place after step a), before step b) and before step j), and, in step i), an annular top layer of gravel grains mixed with a binder is provided between the inner sleeve and outer sleeve, wherein the binder may optionally comprise synthetic resin, in particular a moulding resin - such as an epoxy resin.

According to yet a further embodiment of the further aspect of the invention, the gravel and binder are pressed down or tamped down during step i). This results in an improved simulation of the road and a better binding/attachment of the gravel grains to the binder.

According to yet a further embodiment of the further aspect of the invention, during step i), analogous to the application of the annular top layer, a circular top layer of gravel grains is mixed with a synthetic resin, in particular a moulding resin - such as an epoxy resin -, and provided in the inner sleeve and optionally in the gap between the outer sleeve and the mould wall. In this way, the entire top side of the disc is provided with gravel grains.

The present invention will be explained in more detail below by means of the drawings, in which:
Fig. 1 shows a slipperiness sensor according to the prior art, in which Fig. 1a shows a top view of the top side, and Fig. 1b shows a cross-sectional view.
Fig. 2 diagrammatically shows a first embodiment of the assembly according to the invention, in which Fig. 2a shows a diagrammatic top view of the top side, and Fig. 2b shows a diagrammatic cross-sectional view.
Fig. 3 diagrammatically shows a second embodiment of the assembly according to the invention, which assembly is in addition provided, compared to the first embodiment, with a temperature sensor, in which Fig. 2a shows a diagrammatic top view of the top side, and Fig. 2b shows a diagrammatic cross-sectional view.
Fig. 4 diagrammatically shows a third embodiment of the assembly according to the invention, which assembly comprises a temperature sensor which is incorporated in the disc, in which Fig. 4a shows a diagrammatic top view of the top side, and Fig. 4b shows a diagrammatic cross-sectional view.
Fig. 5 shows a diagrammatic representation of a method for producing an assembly according to the invention, in which Figs 5a, 5b, 5c, 5d, 5e, 5f, 5g, 5h and 5i show the successive steps of this method in sequence.

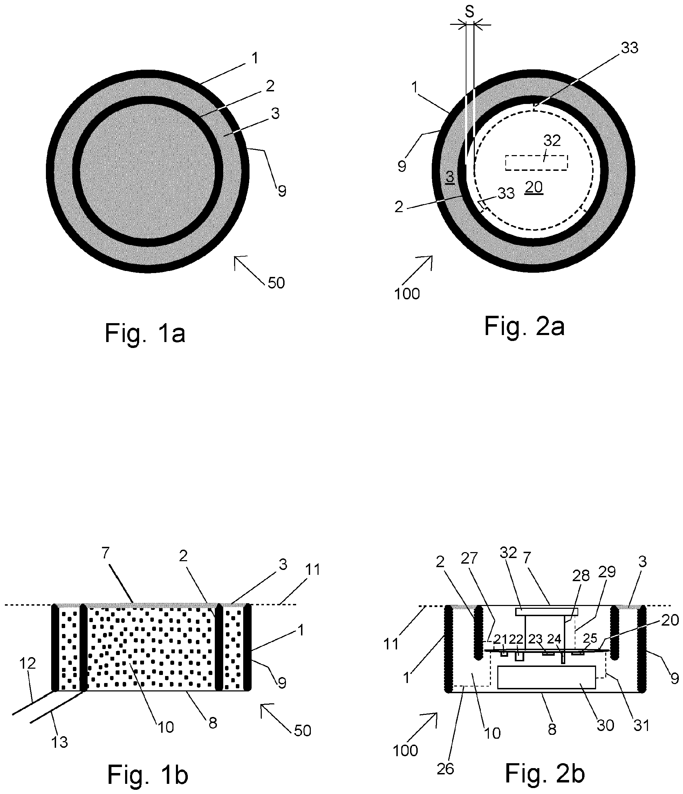

Fig. 1 shows a slipperiness sensor 50 according to the prior art. This known slipperiness sensor consists of a metal outer sleeve 1, a metal inner sleeve 2, a dielectric 10, represented by speckles, as filler in the outer sleeve, and a top layer 3, represented in grey and comprising gravel on the top side 7 of the slipperiness sensor. The bottom side of the slipperiness sensor 50 is denoted by reference numeral 8. A peripheral wall 9 extends between the top side 7 and bottom side 8 and in this case coincides with the outer side of the outer sleeve. The outer side of this slipperiness sensor is thus delimited by the top side 7, the bottom side 8 and the peripheral wall 9. The inner sleeve 2 is concentrically embedded in the speckled dielectric 10 with respect to the outer sleeve 1. In use, this slipperiness sensor is accommodated in a hole (not shown in any more detail) drilled into the road 11. The slipperiness sensor according to the prior art furthermore comprises a 2 core electrical cable, one core 12 of which is connected to the outer sleeve 1 and the other core 13 of which is connected to the inner sleeve 2. This electrical cable extends in a groove milled into the road towards a road station which is situated next to the road and contains electronics by means of which it is possible to determine the electrical conductivity of the top layer 3 between the inner sleeve 2 and outer sleeve 1.

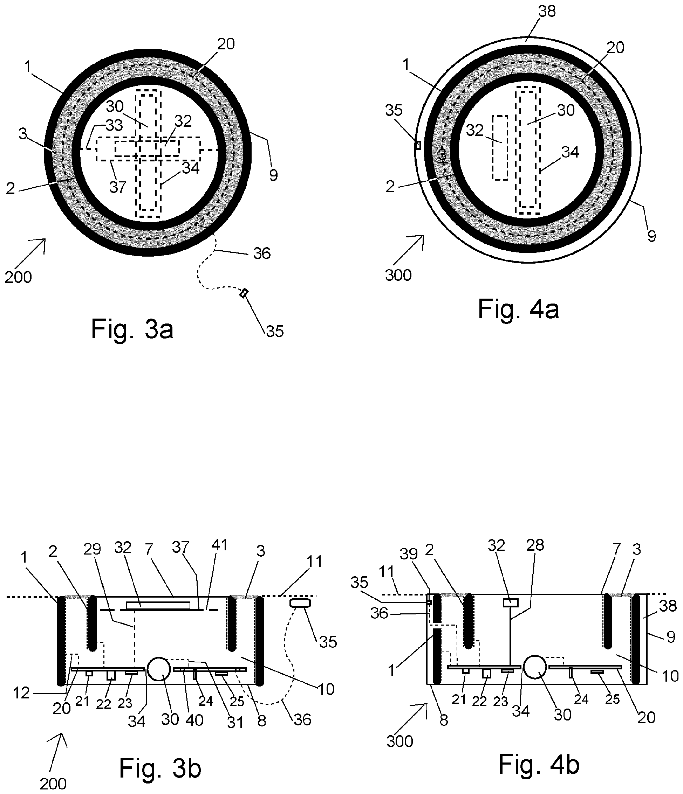

Fig. 2 diagrammatically shows an assembly 100 according to a first embodiment of the invention. Identical components are denoted by the same reference numerals as in Fig. 1. In contrast to Fig. 1b, the dielectric in Fig. 2b is not represented by speckles. The speckles have been omitted in Fig. 2b as well as in Figs 3b and 4b still to be discussed below for the sake of clarity of the drawing, and not because there is no dielectric in Fig. 2b, Fig. 3b or Fig. 4b.

Further differences between Fig. 1 and Fig. 2 are that, in the embodiment shown in Fig. 2, no gravel 3 is provided on the part of the top side 7 which is situated inside the inner sleeve 2, that the inner sleeve 2, in the vertical direction, is shorter than the outer sleeve 3, and that the inner surface and outer surface of the inner sleeve are provided with ridges. However, in this connection, it should be noted that within the scope of the invention defined by the claims, it is readily possible for the abovementioned differences between Fig. 1 and 2 not to be present in the invention. Thus, within the scope of the invention defined by the claims, it is possible for the part of the top side 7 inside the inner sleeve 2 to be provided with gravel or another road-like material, and/or for the inner sleeve to be as long as the outer sleeve in the vertical direction, and/or for the ridges on one or more surfaces of the inner sleeve and outer sleeve to be absent.

With the assembly 100 according to the invention, the electronics - which are housed, according to the prior art, in a road station next to the road - are attached to a first printed circuit board 20. These electronics consist of or comprise electronic components 21, 22, 23, 24 and 25 illustrated in Fig. 2b. In the exemplary embodiment from Fig. 2, these electronic components 21-25 are attached to the bottom side of the printed circuit board 20. In the exemplary embodiment illustrated in Fig. 2, the printed circuit board 20 is circular - see the dashed circle in Fig. 2a. A gap S with a (horizontal) width of at least 1 to 1.5 mm has been provided on all sides between the printed circuit board 20 and the inner sleeve 2. However, the printed circuit board may also have any other shape and/or the gap S may also vary in width. Furthermore, the first printed circuit board may comprise perforations 40 which are absent in Fig. 2, but are present and illustrated in Fig. 3 and which prevent air bubbles from becoming trapped in the dielectric during production of the assembly.

With the assembly according to the invention, the outer sleeve 1 and inner sleeve 2 are electrically connected to the printed circuit board and to electronic components provided thereon by means of wiring 26 and 27, represented by a dashed line.

According to the invention, the assembly furthermore comprises an antenna 32 which, in the exemplary embodiment from Fig. 2, is fitted at a distance above the first printed circuit board 20 by means of columns 28 and is connected to the printed circuit board 20 and electronic components 21-25 provided thereon via a signal-carrying wiring 29. The antenna 32 may also be separate from the printed circuit board 20 and may only be connected to the printed circuit board 20, for example, by means of the signal-carrying wiring 29. It is also conceivable for the antenna 32 to be situated in a different location with respect to the printed circuit board 20, optionally the antenna may protrude from the disc of the assembly.

The assembly according to the invention furthermore comprises a battery 30 which, in the exemplary embodiment from Fig. 2, is enclosed in the dielectric near the bottom side 8 of the disc, under the printed circuit board 20. This battery 30 is connected to the printed circuit board by means of wiring 31, represented by a dashed line, for providing power to the components 21-25 provided thereon. The battery may also be accommodated in another location in the disc.

The illustration from Fig. 2 is diagrammatic and not to scale. In the exemplary embodiment from Fig. 2, the diameter of the inner sleeve is approximately 51 mm, the diameter of the printed circuit board is approximately 48 mm, the vertical distance of the antenna 32 to the top side 7 of the disc is approximately 1-2 mm, and the vertical thickness, at right angles to the diameter of the disc, is approximately 40 mm. Furthermore, in this embodiment, the battery 30 is of the AA type - in which AA defines the dimensions of the battery - and the latter is shown in Fig. 2b in side view, but not to scale.

As is denoted diagrammatically in Fig. 2a by reference numeral 33, the assembly according to the exemplary embodiment shown in Fig. 2 comprises three fixing members 33 which are evenly distributed over the periphery of the printed circuit board 20. These fixing members may be attached to the printed circuit board 20 and project from the printed circuit board 20 towards the inner sleeve 2 and there engage with receiving members which are provided in or on the inner sleeve 2. The fixing members 33 may be fixed to the receiving members and may thus fix the relative position of the first printed circuit board 20 with respect to the inner sleeve 2 and top side 7 of the disc. Optionally, the antenna 32 may be mounted on a second printed circuit board, which is not shown in Fig. 2, in particular on its top side. This second printed circuit board may be round, but may also very well be an elongate strip. This second printed circuit board may furthermore have perforations which prevent air bubbles from being trapped in the dielectric during production of the assembly. In a way as explained for the first printed circuit board, fixing members (not shown) may be provided in connection with the second printed circuit board. These may be attached to the second printed circuit board and project from the second printed circuit board towards the inner sleeve and there engage with receiving members which are provided in or on the inner sleeve. These fixing members may also be fixed to receiving members and may thus fix the relative position of the second printed circuit board with respect to the inner sleeve 2 and top side 7 of the disc, and thus accurately fix the relative position of the antenna with respect to the rest of the disc.

In addition, the cylindrical outer surfaces of the inner sleeve 2 and outer sleeve 1 are provided with horizontal ridges in the illustrated exemplary embodiment. However, these outer surfaces may also be smooth or may be profiled in a different way. It is also conceivable that not all outer surfaces of the inner sleeve and outer sleeve are profiled, but that only one outer surface of each sleeve is profiled or that one sleeve is profiled and the other sleeve is not profiled.

Fig. 3 diagrammatically shows an assembly 200 according to a second embodiment of the invention. Identical components are denoted by the same reference numerals as in Fig. 1 and Fig. 2.

The most important differences between the assembly 100 according to Fig. 2 and the assembly 200 according to Fig. 3 are that, in the assembly 200, the first printed circuit board 20 is provided at the bottom of the disc, the first printed circuit board is provided with a recess 34 which contains the battery, the first printed circuit board has perforations 40, and that the assembly 200 is provided with a temperature sensor 35 which is connected to the first printed circuit board 20 and electronic components thereon via wiring 36, and that the second printed circuit board 37 with perforations 41 which was already discussed as an option for Fig. 2 is actually shown in Fig. 3. It should be noted that, within the scope of protection defined by the claims, it is not required for all these three differences to be present in one embodiment of the invention at the same time. Thus, it is for example conceivable for the first printed circuit board, viewed in a vertical direction, to be situated under the inner sleeve, but for the first printed circuit board to not have a recess 34 for the battery and/or for the temperature sensor to be absent.

Referring to Fig. 3b, it can be seen that the first printed circuit board 20, viewed in a vertical direction, is situated lower than the inner sleeve. This makes it possible for the dimensions of the first printed circuit board, viewed in the horizontal plane, to be greater than the internal cross-sectional area of the inner sleeve. However, the dimensions of the first printed circuit board may, viewed in the horizontal plane, also be smaller than those of the internal horizontal cross-sectional area of the inner sleeve. A larger first printed circuit board provides more space for electronic components and also offers (more) space for the recess 34 in which the battery 30 may be placed. This makes it possible for the battery and first printed circuit board comprising electronic components thereon to be fitted i) near the bottom side of the disc, and/or ii) to be supplied as a prefab unit and to be fitted as one unit in the still viscous dielectric during production.

Entirely independently from the above, the assembly 200 is provided with a temperature sensor 35 which is electrically connected to the first printed circuit board 20 and electronic components 21-25 provided thereon by means of wiring 36. In the assembly 200, the temperature sensor 35 is provided externally to the disc, but it may also be incorporated in the disc by being embedded or enclosed in the dielectric. Below, two examples thereof will be described with reference to Fig. 4, but it should be noted that the temperature sensor 35 may also be incorporated at another location in the disc than is shown in Fig. 4. The temperature sensor 35 may, for example, also be provided on the top side of the disc inside the inner sleeve.

Likewise completely independently from the above, the assembly 200 is provided with a second printed circuit board 37 which is fitted with the antenna 32 on its top side. This second printed circuit board 37 may be fixed with respect to the inner sleeve 2 by means of the fixing members 33 described earlier.

Likewise completely independently from the above, the first printed circuit board 20 in the assembly 200 is provided with perforations. Such perforations 40 may also be provided in the first printed circuit board 20 of the assembly 100 from Fig. 2. These perforations make it possible for trapped air bubbles to escape from the dielectric which is still liquid, or at least viscous, during production of the assembly according to the invention.

Fig. 4 diagrammatically shows an assembly 300 according to a third embodiment of the invention. Identical components are denoted by the same reference numerals as in Fig. 1, Fig. 2 and Fig. 3.

The most important difference between the assembly 200 according to Fig. 3 and the assembly 300 according to Fig. 4 is that, in the embodiment according to Fig. 4, the temperature sensor 35 is embedded (or enclosed) in the dielectric and is thus incorporated in the disc. Furthermore, Fig. 4 does not show the second printed circuit board 37, but it will be clear that the second printed circuit board may be present. In addition, the antenna in Fig. 4 is connected to the first printed circuit board 20 by means of wiring 29 and the supporting columns 28 from Fig. 2 have been omitted, as is the case in Fig. 3. However, it will be clear in this case as well that one or more supporting columns may be present both in Fig. 3 and in Fig. 4.

In principle, the temperature sensor 35 may be arranged anywhere in the disc, but it is preferably provided on the outer side of the disc, in particular on the top side 7 or on the peripheral wall 9 of the disc. By providing the temperature sensor on the outer side of the disc, the temperature in the vicinity of the disc will be measured directly, as it were. In case of changes in temperature, delays in the response time due to the temperature change being transmitted through the dielectric to the temperature sensor are therefore of no significance. The surface temperature of the roadway can be measured directly and with a short response time by providing the temperature sensor on the top side of the disc. In order to be able to measure the surface temperature of the road itself directly and with a short response time, the temperature sensor will be provided, in particular, near both the top side of the disc and the peripheral wall of the disc.

This last embodiment in which the temperature sensor 35 is provided near the top side and near the peripheral wall is shown in Fig. 4. In this example, the temperature sensor 35 is approximately 2 mm under the top side 7 and approximately 1.5 mm from the peripheral wall. As is shown in Fig. 4, this may be achieved by providing a casing of dielectric around the outer side of the outer sleeve. Instead of providing a casing, the outer side of the outer sleeve may also be provided with a local thickening of dielectric, in which the temperature sensor 35 is embedded or enclosed. Embedding or enclosing the temperature sensor in the dielectric not only electrically insulates the temperature sensor from the outer sleeve, inner sleeve, printed circuit boards, battery and antenna, but also protects it from external mechanical influences. In order to electrically connect the temperature sensor 35 to the first printed circuit board 20, the outer sleeve may be provided with a recess 39 through which the wiring 36 passes.

The temperature sensor 35 may also be fitted to both the peripheral wall and the top side of the disc in a different way. For example by providing the recess 39 at the top in the outer sleeve 1 and fitting the temperature sensor entirely or at least partly in this elevated recess. In that case, the additional casing 38 made of dielectric material or local thickening of the outer sleeve with dielectric material may then be dispensed with.

With regard to Figs. 3 and 4, it should be noted that it is also possible for two or more temperature sensors to be provided in a similar manner, and that an external temperature sensor may be provided according to Fig. 3 in combination with one or more temperature sensors incorporated in the disc.

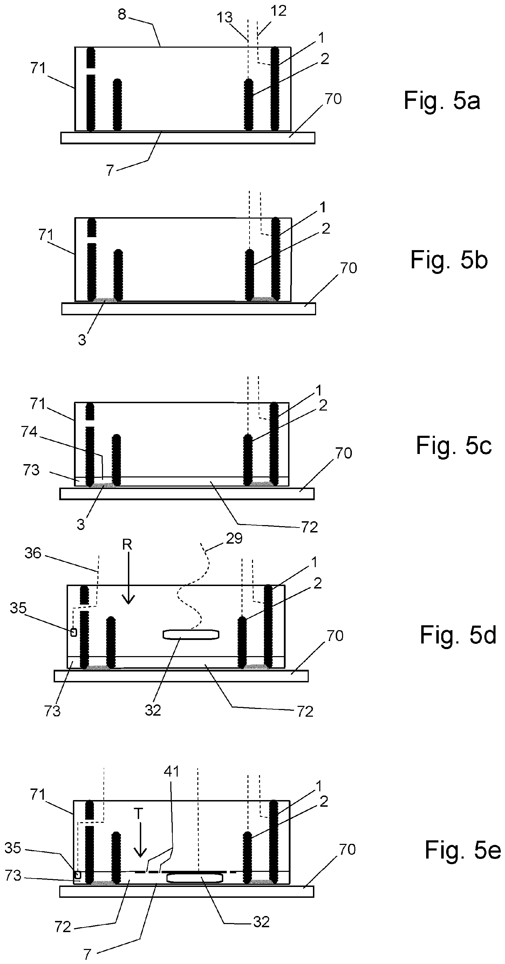

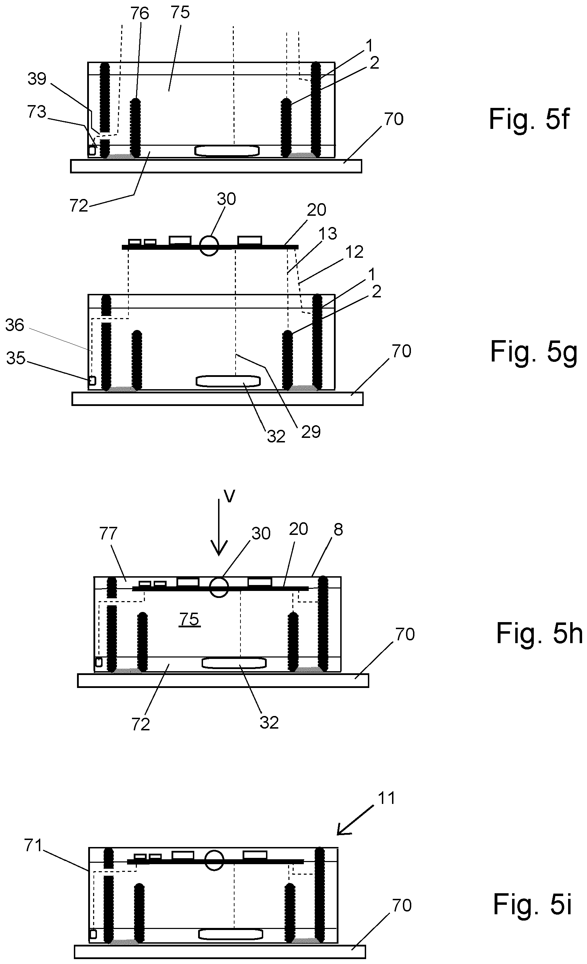

Fig. 5 shows, highly diagrammatically, an example of a method by means of which the assembly 300 according to the invention can be produced. In this case, Figs 5a-5i show a series of consecutive steps in sequence. However, it should be noted that other sequences of steps are possible. Identical components in Fig. 5 are denoted by the same reference numerals as in Fig. 1, Fig. 2, Fig. 3 and Fig. 4.

Fig. 5a firstly shows the step referred to in the claims as 'step a)'. In this step, the outer sleeve 1 and inner sleeve 2 are placed on a base 70, concentrically with respect to each other, and surrounded by a mould wall 71. In order to prevent losing the concentricity of the outer sleeve 1 and inner sleeve 2, or the inner sleeve 2 and/or outer sleeve 1 moving with respect to each other, the inner sleeve 2 and outer sleeve 1 may be fixed with respect to the base. This can be achieved in a simple manner, for example by means of double-sided adhesive tape.

Fig. 5b shows the second step which is referred to in the claims as 'step i)'. In this step, the annular top layer 3 is provided which connects the inner sleeve 2 and outer sleeve 1 to each other by means of a layer 3 which simulates the road. In this example, this top layer consists of tamped down gravel with a binder in the form of an epoxy resin, which is preferably not electrically conductive. Although this is not the case with the method diagrammatically illustrated here, it is also possible to provide an identical or different top layer within the inner sleeve 2 and it is also conceivable to provide an identical or different top layer between the outer sleeve 1 and mould wall 71.

Fig. 5c shows the third step which is referred to in the claims as 'step b)'. In this step, a first layer 72 of liquid, at least viscous, dielectric is provided in the inner sleeve. In the illustrated example in which there is no top layer 3 in the inner sleeve, the steps illustrated in Fig. 3b and Fig. 3c may also be performed in reverse order or simultaneously or in a partly overlapping manner. Furthermore, in this step b), a first layer 73 of liquid, at least viscous dielectric is provided in the space between the mould wall 71 and outer sleeve 3. Providing the first dielectric layer 72 and the first dielectric layer 73 may take place simultaneously, but may also take place consecutively or separately from each other (first the first layer 72 and then the first layer 73 or vice versa). In addition, it is also possible to provide a first dielectric layer 74 made of dielectric between the outer sleeve 1 and inner sleeve 2 at this stage. However, the space between the outer sleeve 1 and inner sleeve 2 may also be filled 1x entirely with dielectric during step b), before step b) or after step b). Fig. 5c shows the first dielectric layer 72 and first dielectric layer 73 as being of equal height, but the vertical heights of the first dielectric layer 73 and first dielectric layer 74 may also be different.

Fig. 5d shows the fourth step which is referred to in the claims as 'step c)'. In this step, antenna 32 is arranged on the liquid, at least viscous, first dielectric layer 72 in the inner sleeve 2, as is indicated by means of arrow R. In a similar way, the temperature sensor 35 is placed on the liquid, at least viscous, first dielectric layer 73 in the space between the mould wall 71 and outer sleeve 1 in this step. Placing the antenna 32 on the first dielectric layer 72 and placing the temperature sensor 35 on the first dielectric layer 73 may take place simultaneously, but may also take place consecutively or separately from each other (first the antenna and then the temperature sensor or vice versa). Furthermore, it is conceivable that the first dielectric layer 73 between the mould wall and outer sleeve is still absent when the antenna 32 is being placed.

Fig. 5e shows that the antenna 32 and the temperature sensor 35 are pressed or tamped into the first dielectric layer 72 and the first dielectric layer 73, respectively, according to arrow T. Although Fig. 5e shows that the antenna 32 and temperature sensor 35 are pressed into the respective first dielectric layer 72, 73 in their entirety, the antenna 32 and/or the temperature sensor 35 may also partly protrude above the first dielectric layer 72 and the first dielectric layer 73, respectively. When a second printed circuit board 37 is provided (according to the invention, this may also be absent) and when this second printed circuit board has perforations 41 which are sufficiently large, air under the second printed circuit board 37 can escape via these perforations, thus preventing air bubbles from being trapped in the first dielectric layer or between this first dielectric layer and the second printed circuit board 37. In a similar way, air can escape via the intermediate space between the second printed circuit board 37 and the inner sleeve 2. In the position illustrated in Fig. 5e, the fixing members 33 (not illustrated in Fig. 5e) engage with receiving members which are provided on the inside of the inner sleeve 2. This engagement keeps the second printed circuit board 37 fixed with respect to the inner sleeve 2 and with respect to the final top side 7 of the disc of the assembly according to the invention.

Fig. 5f shows the fifth step which is referred to in the claims as 'step d)'. In this step, the inner sleeve 2 is further filled with dielectric, for example by pouring. In this way, the second layer 75 of dielectric in the inner sleeve is produced. In a similar way, the space between the inner sleeve 2 and outer sleeve 1 and/or the space between outer sleeve 1 and mould wall 71 may be filled with dielectric before, simultaneously or after. In this case, it is possible that there is no dielectric present yet in the space between outer sleeve and inner sleeve before the space between the inner sleeve and outer sleeve is being filled.

Filling the space between the inner sleeve 2 and outer sleeve 1, as well as filling the space between the mould wall and outer sleeve do not have to be separate operations. After all, by way of example, as soon as the inner sleeve 2 is filled with dielectric, the dielectric will be able to flow over the edge 76 of the inner sleeve and start to fill the space between inner sleeve 2 and outer sleeve 1. As soon as the dielectric then reaches the level of the passage 39 for the wiring of the temperature sensor, the dielectric will flow through said passage 39 and will also be able to fill the space between the mould wall and outer sleeve. Optionally, it is possible for additional passages to be provided through the outer sleeve for this purpose. The passage 39 and/or any additional passages are to this end provided in particular near the top side 7 of the disc - which faces downwards during the production process - and above the first dielectric layer 73.

Fig. 5g shows the sixth step which is referred to in the claims as 'step h)'. In this step, the following are electrically connected to the first printed circuit board 20 and electronic components 21-25 provided thereon: the inner sleeve 2 via 13, the outer sleeve 1 via 12, the battery 30 and - if present - the temperature sensor 35 via 36, and the antenna 32 is connected in a signal-carrying manner to the printed circuit board 20 and electronic components 21-25 provided thereon via 29. It should be noted that the 'step h)' illustrated in Fig. 5f may also take place before or simultaneously with the 'step c)' illustrated in Figs. 5d and 5e, or even later, after and/or during the steps illustrated in Figs. 5h and 5i. It is also conceivable that the connections of the inner sleeve and/or the outer sleeve and/or the battery and/or the temperature sensor and/or the antenna with the first printed circuit board have already been brought about before any dielectric is provided or poured. The first printed circuit board on the one hand and the inner sleeve and/or the outer sleeve and/or the battery and/or the temperature sensor and/or the antenna may, for example, be supplied as a prefab unit.

Fig. 5h shows the step which is referred to in the claims as 'step e'. In this 'step e)', the first printed circuit board with the electronic components provided thereon is placed on the still liquid, at least viscous, second dielectric layer 75 made of dielectric and is optionally - see arrow V - pressed into this second dielectric layer 75. In this case, the battery 30 may be placed on or in the second dielectric layer made of dielectric in combination with the first printed circuit board, or alternatively before the first printed circuit board or after the first printed circuit board. Subsequently, according to 'step f)' from the claims, a third dielectric layer 77 of liquid, at least viscous, dielectric is provided in the outer sleeve 1, for example poured into the latter. In this case, the battery 30 will meanwhile be embedded or enclosed further in the dielectric - 'step k)' from the claims - assuming that this 'step k)' did not already take place when the battery 30 was placed in the second dielectric layer 75. The level of the dielectric will in this case rise further until it reaches the (final) bottom side 8 of the disc of the assembly according to the invention. It will be clear that 'step k)' may also take place later, for example after the outer sleeve 1 has been completely filled with dielectric, by pushing the battery 30 into the already poured third layer 77 of dielectric.

Fig. 5i shows the step which is referred to in the claims as 'step g)'. In this step, the first dielectric layer, the second dielectric layer and the third dielectric layer are allowed to cure, assuming that one or more of these layers have not already been cured. Curing these layers does not have to take place simultaneously and may already take place in part or in full during preceding steps following the application of the respective dielectric layer. However, depending on the dielectric used, this curing may last from a few hours to a few days. In this case, curing of the three layers will to a large degree take place simultaneously.

After the first dielectric layer 72, 73, the second dielectric layer 75 and third dielectric layer 77 have been cured sufficiently, the mould wall 71 may be removed. This may be made, for example, of PVC. It is also conceivable for the mould wall 71 to just remain in place.

## Claims

1. Road sensor assembly (100, 200, 300) for performing measurements on the surface of a road (11), wherein the assembly comprises the following:
- a disc made of a dielectric (10) of a solid material,
- a metal outer sleeve (1) which is provided in or around the dielectric (10),
- a metal inner sleeve (2) which is provided in the dielectric (10), in the outer sleeve (1) and concentrically with respect thereto,
wherein the disc has an outer side which is delimited by the top side (7) which, in use, faces upwards, by a bottom side (8) which, in use, faces downwards, and by a peripheral wall (9) which extends between the top side (7) and the bottom side (8),
**characterized**
**in that** the assembly furthermore comprises:
- an annular top layer (3) on a top side (7) of the disc, which annular top layer (3) extends in the part between the inner sleeve (2) and outer sleeve (3), connects the inner sleeve (2) and outer sleeve (3), and is configured to simulate a road surface,
- a first printed circuit board (20) provided with electronic components (21-25) which are electrically connected to the inner sleeve (2) and outer sleeve (3), and which are configured to determine the electrical conductivity of the top layer (3) and to generate a transmitter signal comprising information representative of the electrical conductivity,
- an antenna (32) connected to the electronic components (21-25) and configured to transmit the transmitter signal, and
- an electrical power supply (30) connected to the electronic components (21-25) for supplying them with electrical power,
**in that** the electrical power supply is a battery (30) which is embedded in the dielectric (10), and
**in that** the first printed circuit board (20) provided with the electronic components (21-25) and the antenna (32) are enclosed in the dielectric (10).

2. Assembly (100, 200, 300) according to Claim 1,
wherein the first printed circuit board (20) extends in a plane parallel to the top side (7) of the disc, and
wherein the electronic components (21-25) are provided on a side of the first printed circuit board (20) which, in use, faces downwards.

3. Assembly (200, 300) according to one of the preceding claims,
wherein the first printed circuit board (20) is provided in a bottom half of the disc, near the bottom side (8) of the disc,
and/or
wherein the battery (30) is provided in a bottom half of the disc, such as near the bottom side (8) of the disc.

4. Assembly (200, 300) according to Claim 3, wherein the first printed circuit board (20) is provided with a recess, and wherein the battery (32) is provided in the recess (34).

5. Assembly (100, 200, 300) according to one of the preceding claims, wherein the height of the inner sleeve (2) is smaller than the height of the outer sleeve (3), and wherein the first printed circuit board (20) and/or the battery (30), viewed in use and in the vertical direction, is situated lower than the inner sleeve (2).

6. Assembly (100, 200, 300) according to one of the preceding claims, wherein the antenna (32) is provided near or adjacent to the top side (7) of the disc.

7. Assembly (100, 200, 300) according to one of the preceding claims, wherein the antenna (32) is enclosed in the dielectric (10), and wherein the distance of the antenna (32) to the top side of the disc is at most 5 mm, such as at most 3 mm or at most 1 mm.

8. Assembly (100, 200, 300) according to one of the preceding claims, wherein the first printed circuit board (20) has one or more perforations (40) with a diameter of at least 1 mm or at least 1.5 mm, such as at least 2 mm or at least 2.5 mm.

9. Assembly (100, 200, 300) according to one of the preceding claims, wherein the dielectric (10) comprises a plurality of layers (72, 73, 74; 75; 77), and wherein the first printed circuit board (20) and/or the antenna (35) is provided in a transition zone from one layer to another layer.

10. Assembly (300) according to one of the preceding claims, wherein the assembly (300) furthermore comprises at least one temperature sensor (35), such as two temperature sensors, which are electrically connected to the electronic components (21-25), wherein the electronic components (21-25) are furthermore configured to process an electrical signal coming from the at least one temperature sensor (35) and to further provide the generated transmitter signal with information representative of the measured temperature.

11. Assembly (300) according to Claim 10,
wherein one or two of these temperature sensors (35) are embedded and/or enclosed in the dielectric (10), and
wherein the temperature sensor(s) (35) embedded and/or enclosed in the dielectric (10) are optionally provided on the outer side of the disc, such as adjacent to the outer side of the disc.

12. Assembly (300) according to Claim 11, wherein the outer sleeve is arranged in the dielectric (10), and wherein the temperature sensors (35) embedded and/or enclosed in the dielectric (10) are situated outside the outer sleeve.

13. Assembly (100, 200, 300) according to one of the preceding claims, wherein:
• the dielectric (10) is made from a synthetic resin, in particular a moulding resin - such as a polyester moulding resin or an epoxy moulding resin or a polyurethane moulding resin or a combination of one or more of these moulding resins -;
and/or
• the annular top layer (3) comprises gravel and synthetic resin, in particular moulding resin - such as epoxy resin -;
and/or
• the dielectric (10) has a melting point of at least 100 °C, such as at least 120 °C or at least 150 °C.

14. Method for producing a road sensor assembly (100, 200, 300) according to one of the preceding claims, comprising the following steps:
- step a): fitting the outer sleeve (1) and inner sleeve (2) onto a base (70) concentrically with respect to each other;
- step b): applying, for example by pouring, a first layer (72) of liquid, at least viscous, dielectric (10) in the inner sleeve (2);
- step c): placing the antenna (32), such as a second printed circuit board (37) comprising the antenna (32), onto the viscous first dielectric layer (72) in the inner sleeve (2) and optionally pressing down the antenna (32), such as the second printed circuit board (37) comprising the antenna (32), into this first dielectric layer (72);
- step d): applying, for example by pouring, a second layer (75) of liquid, at least viscous, dielectric (10) in the inner sleeve (2) in such a way that the antenna (32), such as the second printed circuit board (37) comprising the antenna (32), is enclosed in a transition zone between the first dielectric layer (72) and second dielectric layer (75);
- step e): placing the first printed circuit board (20) comprising the electronic components (21-25) provided thereon onto the viscous second dielectric layer (75) and optionally pressing down the first printed circuit board (20) comprising the electronic components (21-25) provided thereon into the second dielectric layer (75);
- step f): applying, for example by pouring, a third layer (77) of liquid, at least viscous, dielectric (10) in the outer sleeve (1) in such a way that the first printed circuit board (20) becomes enclosed in a transition zone between the second dielectric layer (75) and third dielectric layer (77);
- step g): allowing the first dielectric layer (72), the second dielectric layer (75), and the third dielectric layer (77) to cure;
- step h): electrically connecting the electronic components (21-25) to the outer sleeve (1) and inner sleeve (2), to the antenna (32), and to the battery (30);
- step i): applying the annular top layer (3);
- step j): filling the space between the outer sleeve (1) and inner sleeve (2) with dielectric (10); and
- step k): embedding or enclosing the battery (30) in the dielectric (10).

15. Method according to Claim 14,
wherein, in step a), the inner sleeve (2) and outer sleeve (1) are placed concentrically in a mould, which mould has a mould bottom forming the base (70) and a mould wall (71) which extends around the outer sleeve (1) in such a way that a gap is created between the mould wall (71) and the outer sleeve (1),
wherein step b) furthermore comprises applying a first layer (73) of liquid, at least viscous, dielectric (10) into the gap,
wherein step c) furthermore comprises providing at least one temperature sensor (35) onto the viscous first dielectric layer (73) in the gap and optionally pressing down the at least one temperature sensor (35) into this first dielectric layer (73),
wherein step d) furthermore comprises applying a second layer of liquid, at least viscous, dielectric in the gap in such a way that the at least one temperature sensor (35) becomes embedded or enclosed in a transition zone between the first dielectric layer and second dielectric layer formed in the gap, and
step f) furthermore comprises electrically connecting the at least one temperature sensor (35) and the electronic components (21-25).

16. Method according to one of claims 14 or 15, wherein the second printed circuit board (37) and/or first printed circuit board (20) has one or more perforations (40 and/or 41) in such a way that, during step c) and/or step e), gas bubbles which are present in the liquid, at least viscous, layer which is applied in step b) and/or step d), or between the layer which is applied in step b) and/or step d), and the first printed circuit board (20) and the second printed circuit board (37), respectively, escape via the perforations (40, 41).

## Patentansprüche

1. Straßensensoranordnung (100, 200, 300) zum Durchführen von Messungen auf der Oberfläche einer Straße (11), wobei die Anordnung Folgendes umfasst:
- eine Scheibe, die aus einem Dielektrikum (10) eines festen Materials hergestellt ist,
- eine Metallaußenhülse (1), welche in dem Dielektrikum (10) oder um dieses herum bereitgestellt ist,
- eine Metallinnenhülse (2), welche in dem Dielektrikum (10), in der Außenhülse (1) und konzentrisch diesbezüglich bereitgestellt ist,
wobei die Scheibe eine Außenseite aufweist, welche durch die Oberseite (7), welche im Gebrauch nach oben gerichtet ist, durch eine Unterseite (8), welche im Gebrauch nach unten gerichtet ist, und durch eine Umfangswand (9), welche sich zwischen der Oberseite (7) und der Unterseite (8) erstreckt, begrenzt ist,
**dadurch gekennzeichnet, dass** die Anordnung ferner Folgendes umfasst:
- eine ringförmige obere Schicht (3) auf einer Oberseite (7) der Scheibe, wobei sich die ringförmige obere Schicht (3) in dem Teil zwischen der Innenhülse (2) und der Außenhülse (3) erstreckt, die Innenhülse (2) und die Außenhülse (3) verbindet und konfiguriert ist, um eine Straßenoberfläche zu simulieren,
- eine erste Leiterplatte (20), die mit elektronischen Komponenten (21-25) versehen ist, welche elektrisch mit der Innenhülse (2) und der Außenhülse (3) verbunden sind, und welche konfiguriert sind, um die elektrische Leitfähigkeit der oberen Schicht (3) zu bestimmen und um ein Sendersignal zu erzeugen, das Informationen umfasst, die repräsentativ für die elektrische Leitfähigkeit sind,
- eine Antenne (32), die mit den elektronischen Komponenten (21-25) verbunden ist und konfiguriert ist, um das Sendersignal zu übertragen, und
- eine elektrische Stromversorgung (30), die mit den elektronischen Komponenten (21-25) verbunden ist, um diese mit elektrischem Strom zu versorgen,
**dass** die elektrische Stromversorgung eine Batterie (30) ist, welche in dem Dielektrikum (10) eingebettet ist, und
**dass** die erste Leiterplatte (20), die mit den elektronischen Komponenten (21-25) versehen ist, und die Antenne (32) in dem Dielektrikum (10) eingeschlossen sind.

2. Anordnung (100, 200, 300) nach Anspruch 1, wobei sich die erste Leiterplatte (20) in einer Ebene parallel zu der Oberseite (7) der Scheibe erstreckt, und wobei die elektronischen Komponenten (21-25) auf einer Seite der ersten Leiterplatte (20) bereitgestellt sind, welche im Gebrauch nach unten gerichtet ist.

3. Anordnung (200, 300) nach einem der vorherigen Ansprüche,
wobei die erste Leiterplatte (20) in einer unteren Hälfte der Scheibe in der Nähe der unteren Seite (8) der Scheibe bereitgestellt ist, und/oder
wobei die Batterie (30) in einer unteren Hälfte der Scheibe, beispielsweise in der Nähe der Unterseite (8) der Scheibe, bereitgestellt ist.

4. Anordnung (200, 300) nach Anspruch 3, wobei die erste Leiterplatte (20) mit einer Aussparung versehen ist, und wobei die Batterie (32) in der Aussparung (34) bereitgestellt ist.

5. Anordnung (100, 200, 300) nach einem der vorherigen Ansprüche, wobei die Höhe der Innenhülse (2) geringer als die Höhe der Außenhülse (3) ist, und wobei die erste Leiterplatte (20) und/oder die Batterie (30) im Gebrauch und in der vertikalen Richtung gesehen niedriger als die Innenhülse (2) liegen.

6. Anordnung (100, 200, 300) nach einem der vorherigen Ansprüche, wobei die Antenne (32) in der Nähe oder benachbart zu der Oberseite (7) der Scheibe bereitgestellt ist.

7. Anordnung (100, 200, 300) nach einem der vorherigen Ansprüche, wobei die Antenne (32) in dem Dielektrikum (10) eingeschlossen ist, und wobei die Distanz der Antenne (32) zu der Oberseite der Scheibe höchstens 5 mm, beispielsweise höchstens 3 mm oder höchstens 1 mm, beträgt.

8. Anordnung (100, 200, 300) nach einem der vorherigen Ansprüche, wobei die erste Leiterplatte (20) eine oder mehrere Perforationen (40) mit einem Durchmesser von mindestens 1 mm oder mindestens 1,5 mm, beispielsweise mindestens 2 mm oder mindestens 2,5 mm, aufweist.

9. Anordnung (100, 200, 300) nach einem der vorherigen Ansprüche, wobei das Dielektrikum (10) eine Vielzahl von Schichten (72, 73, 74; 75; 77) aufweist, und wobei die erste Leiterplatte (20) und/oder die Antenne (35) in einem Übergangsbereich von einer Schicht zu einer anderen Schicht bereitgestellt sind.

10. Anordnung (300) nach einem der vorherigen Ansprüche, wobei die Anordnung (300) ferner mindestens einen Temperatursensor (35), beispielsweise zwei Temperatursensoren, welche elektrisch mit den elektronischen Komponenten (21-25) verbunden sind, umfasst, wobei die elektronischen Komponenten (21-25) ferner konfiguriert sind, um ein elektrisches Signal zu verarbeiten, das von dem mindestens einen Temperatursensor (35) kommt, und um ferner das erzeugte Sendersignal mit Informationen, die repräsentativ für die gemessene Temperatur sind, bereitzustellen.

11. Anordnung (300) nach Anspruch 10,
wobei eine oder beide dieser Temperatursensoren (35) in dem Dielektrikum (10) eingebettet und/oder eingeschlossen sind, und
wobei der/die Temperatursensor(en) (35), der/die in dem Dielektrikum (10) eingebettet und/oder eingeschlossen sind, optional auf der Außenseite der Scheibe, beispielsweise benachbart zu der Außenseite der Scheibe, bereitgestellt sind.

12. Anordnung (300) nach Anspruch 11, wobei die Außenhülse in dem Dielektrikum (10) angeordnet ist, und wobei die Temperatursensoren (35), die in dem Dielektrikum (10) eingebettet und/oder eingeschlossen sind, außerhalb der Außenhülse liegen.

13. Anordnung (100, 200, 300) nach einem der vorherigen Ansprüche, wobei:
• das Dielektrikum (10) aus einem Kunstharz, insbesondere einem Gießharz - beispielsweise einem Polyestergießharz oder einem Epoxidgießharz oder einem Polyurethangießharz oder einer Kombination von einem oder mehreren dieser Gießharze - hergestellt ist;
und/oder
• die ringförmige obere Schicht (3) Kies und Kunstharz, insbesondere Gießharz - beispielsweise Epoxidharz - umfasst,
und/oder
• das Dielektrikum (10) einen Schmelzpunkt von mindestens 100 °C, beispielsweise mindestens 120 °C oder mindestens 150 °C, aufweist.

14. Verfahren zum Produzieren einer Straßensensoranordnung (100, 200, 300) nach einem der vorherigen Ansprüche, umfassend die folgenden Sch ritte:
- Schritt a): Konzentrisches Anbringen der Außenhülse (1) und der Innenhülse (2) zueinander auf einem Boden (70);
- Schritt b): Aufbringen, zum Beispiel durch Gießen, einer ersten Schicht (72) von flüssigem, zumindest viskosem, Dielektrikum (10) in der Innenhülse (2);
- Schritt c): Platzieren der Antenne (32), beispielsweise einer zweiten Leiterplatte (37), die die Antenne (32) umfasst, auf der viskosen ersten Dielektrikumsschicht (72) in der Innenhülse (2) und optional Herunterdrücken der Antenne (32), beispielsweise der zweiten Leiterplatte (37), die die Antenne (32) umfasst, in die erste Dielektrikumsschicht (72) hinein;
- Schritt d): Aufbringen, zum Beispiel durch Gießen, einer zweiten Schicht (75) von flüssigem, zumindest viskosem, Dielektrikum (10) in der Innenhülse (2), so dass die Antenne (32), beispielsweise die zweite Leiterplatte (37), die die Antenne (32) umfasst, in einem Übergangsbereich zwischen der ersten Dielektrikumsschicht (72) und der zweiten Dielektrikumsschicht (75) eingeschlossen ist;
- Schritt e): Platzieren der ersten Leiterplatte (20), die die elektronischen Komponenten (21-25) umfasst, die darauf bereitgestellt sind, auf der viskosen zweiten Dielektrikumsschicht (75) und optional Herunterdrücken der ersten Leiterplatte (20), die die elektronischen Komponenten (21-25) umfasst, die darauf bereitgestellt sind, in die zweite Dielektrikumsschicht (75) hinein;
- Schritt f): Aufbringen, zum Beispiel durch Gießen, einer dritten Schicht (77) von flüssigem, zumindest viskosem Dielektrikum (10) in der Außenhülse (1), so dass die erste Leiterplatte (20) in einem Übergangsbereich zwischen der zweiten Dielektrikumsschicht (75) und der dritten Dielektrikumsschicht (77) eingeschlossen wird;
- Schritt g): Erlauben, dass die erste Dielektrikumsschicht (72), die zweite Dielektrikumsschicht (75) und die dritte Dielektrikumsschicht (77) aushärten;
- Schritt h): elektrisches Verbinden der elektronischen Komponenten (21-25) mit der Außenhülse (1) und der Innenhülse (2), mit der Antenne (32) und mit der Batterie (30);
- Schritt i): Aufbringen der ringförmigen oberen Schicht (3);
- Schritt j): Füllen des Raums zwischen der Außenhülse (1) und der Innenhülse (2) mit dem Dielektrikum (10); und
- Schritt k): Einbetten oder Einschließen der Batterie (30) in dem Dielektrikum (10).

15. Verfahren nach Anspruch 14,
wobei bei Schritt a) die Innenhülse (2) und die Außenhülse (1) konzentrisch in einer Form platziert werden, wobei die Form eine Formunterseite, die den Boden (70) bildet, und eine Formwand (71), welche sich um die Außenhülse (1) herum erstreckt, derart umfasst, dass ein Spalt zwischen der Formwand (71) und der Außenhülse (1) erzeugt wird,
wobei Schritt b) ferner das Aufbringen einer ersten Schicht (73) von flüssigem, zumindest viskosem Dielektrikum (10) in den Spalt umfasst,
wobei Schritt c) ferner das Bereitstellen mindestens eines Temperatursensors (35) auf die viskose erste Dielektrikumsschicht (73) in dem Spalt und optional das Herunterdrücken des mindestens einen Temperatursensors (35) in die erste Dielektrikumsschicht (73) hinein umfasst,
wobei Schritt d) ferner das Aufbringen einer zweiten Schicht von flüssigem, zumindest viskosem Dielektrikum in dem Spalt derart umfasst, dass der mindestens eine Temperatursensor (35) in einem Übergangsbereich zwischen der ersten Dielektrikumsschicht und der zweiten Dielektrikumsschicht, die in dem Spalt gebildet sind, eingebettet oder eingeschlossen wird, und
Schritt f) ferner das elektrische Verbinden des mindestens einen Temperatursensors (35) und der elektronischen Komponenten (21-25) umfasst.

16. Verfahren nach einem der Ansprüche 14 oder 15,
wobei die zweite Leiterplatte (37) und/oder die erste Leiterplatte (20) eine oder mehrere Perforationen (40 und/oder 41) aufweisen, so dass während Schritt c) und/oder Schritt e) Gasblasen, welche in der flüssigen, zumindest viskosen Schicht, welche in Schritt b) und/oder Schritt d) aufgebracht wird, oder jeweils zwischen der Schicht, welche in Schritt b) und/oder Schritt d) aufgebracht wird, und der ersten Leiterplatte (20) und der zweiten Leiterplatte (37) vorhanden sind, durch die Perforationen (40, 41) austreten.

## Revendications

1. Ensemble de capteurs routiers (100, 200, 300) pour effectuer des mesures sur la surface d'une route (11), dans lequel l'ensemble comprend ce qui suit :
- un disque constitué d'un diélectrique (10) d'un matériau solide,
- un manchon extérieur métallique (1) qui est prévu dans ou autour du diélectrique (10),
- un manchon intérieur métallique (2) qui est prévu dans le diélectrique (10), dans le manchon extérieur (1) et de manière concentrique par rapport à celui-ci,
dans lequel le disque a un côté extérieur qui est délimité par le côté supérieur (7) qui, en utilisation, est tourné vers le haut, par un côté inférieur (8) qui, en utilisation, est tourné vers le bas, et par une paroi périphérique (9) qui s'étend entre le côté supérieur (7) et le côté inférieur (8),
**caractérisé**
**en ce que** l'ensemble comprend en outre
- une couche supérieure annulaire (3) sur un côté supérieur (7) du disque, laquelle couche supérieure annulaire (3) s'étend dans la partie entre le manchon intérieur (2) et le manchon extérieur (3), relie le manchon intérieur (2) et le manchon extérieur (3), et est configurée pour simuler une surface de route,
- une première carte de circuit imprimé (20) pourvue de composants électroniques (21-25) qui sont connectés électriquement au manchon intérieur (2) et au manchon extérieur (3), et qui sont configurés pour déterminer la conductivité électrique de la couche supérieure (3) et pour générer un signal d'émetteur comprenant des informations représentatives de la conductivité électrique,
- une antenne (32) connectée aux composants électroniques (21-25) et configurée pour transmettre le signal d'émission, et
- une alimentation électrique (30) connectée aux composants électroniques (21-25) pour les alimenter en énergie électrique,
**en ce que** l'alimentation électrique est une batterie (30) qui est noyée dans le diélectrique (10), et
**en ce que** la première carte de circuit imprimé (20) pourvue des composants électroniques (21-25) et l'antenne (32) sont enfermées dans le diélectrique (10).

2. Ensemble (100, 200, 300) selon la revendication 1,
dans lequel la première carte de circuit imprimé (20) s'étend dans un plan parallèle à la face supérieure (7) du disque, et
dans lequel les composants électroniques (21-25) sont prévus sur une face de la première carte de circuit imprimé (20) qui, en utilisation, est tournée vers le bas.

3. Ensemble (200, 300) selon l'une des revendications précédentes,
dans lequel la première carte de circuit imprimé (20) est prévue dans une moitié inférieure du disque, près de la face inférieure (8) du disque,
et/ou
dans lequel la batterie (30) est prévue dans une moitié inférieure du disque, par exemple près de la face inférieure (8) du disque.

4. Ensemble (200, 300) selon la revendication 3, dans lequel la première carte de circuit imprimé (20) est pourvue d'un évidement, et dans lequel la batterie (32) est prévue dans l'évidement (34).

5. Ensemble (100, 200, 300) selon l'une des revendications précédentes, dans lequel la hauteur du manchon intérieur (2) est inférieure à la hauteur du manchon extérieur (3), et dans lequel la première carte de circuit imprimé (20) et/ou la batterie (30), vue en utilisation et dans le sens vertical, est située plus bas que le manchon intérieur (2).

6. Ensemble (100, 200, 300) selon l'une des revendications précédentes, dans lequel l'antenne (32) est prévue à proximité ou adjacente à la face supérieure (7) du disque.

7. Ensemble (100, 200, 300) selon l'une des revendications précédentes, dans lequel l'antenne (32) est enfermée dans le diélectrique (10), et dans lequel la distance de l'antenne (32) à la face supérieure du disque est d'au plus 5 mm, par exemple d'au plus 3 mm ou d'au plus 1 mm.

8. Ensemble (100, 200, 300) selon l'une des revendications précédentes, dans lequel la première carte de circuit imprimé (20) comporte une ou plusieurs perforations (40) d'un diamètre d'au moins 1 mm ou d'au moins 1,5 mm, tel qu'au moins 2 mm ou au moins 2,5 mm.

9. Ensemble (100, 200, 300) selon l'une des revendications précédentes, dans lequel le diélectrique (10) comprend une pluralité de couches (72, 73, 74 ; 75 ; 77), et dans lequel la première carte de circuit imprimé (20) et/ou l'antenne (35) est prévue dans une zone de transition d'une couche à une autre couche.

10. Ensemble (300) selon l'une des revendications précédentes, dans lequel l'ensemble (300) comprend en outre au moins un capteur de température (35), tel que deux capteurs de température, qui sont connectés électriquement aux composants électroniques (21-25), dans lequel les composants électroniques (21-25) sont en outre configurés pour traiter un signal électrique provenant du au moins un capteur de température (35) et pour fournir en outre au signal d'émetteur généré des informations représentatives de la température mesurée.

11. Ensemble (300) selon la revendication 10,
dans lequel un ou deux de ces capteurs de température (35) sont noyés et/ou enfermés dans le diélectrique (10), et
dans lequel le ou les capteurs de température (35) noyés et/ou enfermés dans le diélectrique (10) sont éventuellement prévus sur la face extérieure du disque, par exemple adjacents à la face extérieure du disque.

12. Ensemble (300) selon la revendication 11, dans lequel le manchon extérieur est disposé dans le diélectrique (10), et dans lequel les capteurs de température (35) noyés et/ou enfermés dans le diélectrique (10) sont situés à l'extérieur du manchon extérieur.

13. Ensemble (100, 200, 300) selon l'une des revendications précédentes,
dans lequel :
• le diélectrique (10) est réalisé en une résine synthétique, notamment une résine de moulage - telle qu'une résine de moulage polyester ou une résine de moulage époxy ou une résine de moulage polyuréthane ou une combinaison d'une ou plusieurs de ces résines de moulage - ;
et/ou
• la couche supérieure annulaire (3) comprend du gravier et une résine synthétique, en particulier une résine de moulage - telle qu'une résine époxy - ;
et/ou
• le diélectrique (10) a un point de fusion d'au moins 100 °C, tel qu'au moins 120 °C ou au moins 150 °C.

14. Procédé de réalisation d'un ensemble capteur routier (100, 200, 300) selon l'une des revendications précédentes, comprenant les étapes suivantes :
- étape a) : mettre en place le manchon extérieur (1 ) et le manchon intérieur (2) sur une base (70) de manière concentrique l'un par rapport à l'autre ;
- étape b) : appliquer, par exemple par coulage, une première couche (72) de diélectrique (10) liquide, au moins visqueux, dans le manchon intérieur (2) ;
- étape c) : placer l'antenne (32), telle qu'une seconde carte de circuit imprimé (37) comprenant l'antenne (32), sur la première couche diélectrique visqueuse (72) dans le manchon intérieur (2) et éventuellement enfoncer l'antenne (32), telle que la seconde carte de circuit imprimé (37) comprenant l'antenne (32), dans cette première couche diélectrique (72) ;
- étape d) : appliquer, par exemple en versant, une deuxième couche (75) de diélectrique (10) liquide, au moins visqueux, dans le manchon intérieur (2) de telle sorte que l'antenne (32), telle que la deuxième carte de circuit imprimé (37) comprenant l'antenne (32), soit enfermée dans une zone de transition entre la première couche diélectrique (72) et la deuxième couche diélectrique (75) ;
- étape e) : placer la première carte de circuit imprimé (20) comprenant les composants électroniques (21-25) prévus sur celle-ci sur la seconde couche diélectrique visqueuse (75) et éventuellement presser la première carte de circuit imprimé (20) comprenant les composants électroniques (21-25) prévus sur celle-ci dans la seconde couche diélectrique (75) ;
- étape f) : appliquer, par exemple en versant, une troisième couche (77) de diélectrique (10) liquide, au moins visqueux, dans le manchon extérieur (1) de telle sorte que la première carte de circuit imprimé (20) soit enfermée dans une zone de transition entre la deuxième couche diélectrique (75) et la troisième couche diélectrique (77) ;
- étape g) : permettre à la première couche diélectrique (72), à la deuxième couche diélectrique (75) et à la troisième couche diélectrique (77) de durcir ;
- étape h) : connecter électriquement les composants électroniques (21-25) au manchon extérieur (1) et au manchon intérieur (2), à l'antenne (32) et à la batterie (30) ;
- étape i) : appliquer la couche supérieure annulaire (3) ;
- étape j) : remplir l'espace entre le manchon extérieur (1) et le manchon intérieur (2) avec un diélectrique (10) ; et
- étape k) : intégrer ou enfermer la batterie (30) dans le diélectrique (10).

15. Procédé selon la revendication 14,
dans lequel, à l'étape a), le manchon intérieur (2) et le manchon extérieur (1) sont placés concentriquement dans un moule, lequel moule a un fond de moule formant la base (70) et une paroi de moule (71) qui s'étend autour du manchon extérieur (1) de telle manière qu'un espace est créé entre la paroi de moule (71) et le manchon extérieur (1),
dans lequel l'étape b) comprend en outre l'application d'une première couche (73) de diélectrique (10) liquide, au moins visqueux, dans l'espace,
dans lequel l'étape c) comprend en outre l'application d'au moins un capteur de température (35) sur la première couche diélectrique visqueuse (73) dans l'espace et éventuellement l'enfoncement du au moins un capteur de température (35) dans cette première couche diélectrique (73),
dans lequel l'étape d) comprend en outre l'application d'une deuxième couche de diélectrique liquide, au moins visqueuse, dans l'espace de telle sorte que le au moins un capteur de température (35) devienne incorporé ou enfermé dans une zone de transition entre la première couche diélectrique et la deuxième couche diélectrique formée dans l'espace, et
l'étape f) comprend en outre la connexion électrique du au moins un capteur de température (35) et des composants électroniques (21-25).

16. Procédé selon l'une des revendications 14 ou 15, dans lequel la deuxième carte de circuit imprimé (37) et/ou la première carte de circuit imprimé (20) présente une ou plusieurs perforations (40 et/ou 41) de telle sorte que, pendant l'étape c) et/ou l'étape e), des bulles de gaz présentes dans la couche liquide, au moins visqueuse, appliquée à l'étape b) et/ou à l'étape d), ou entre la couche appliquée à l'étape b) et/ou à l'étape d) et la première carte de circuit imprimé (20) ou la deuxième carte de circuit imprimé (37), s'échappent par les perforations (40, 41).
